(19) **Europäisches Patentamt** / **European Patent Office** / **Office européen des brevets**

(11) **EP 3 940 273 B1**

(12) **EUROPÄISCHE PATENTSCHRIFT**

| | |
|---|---|
| (45) Veröffentlichungstag und Bekanntmachung des Hinweises auf die Patenterteilung:<br>**22.05.2024 Patentblatt 2024/21** | (51) Internationale Patentklassifikation (IPC):<br>**F01P 7/14** (2006.01)    **F16K 5/06** (2006.01)<br>**F16K 5/20** (2006.01)    **F01P 7/16** (2006.01) |
| (21) Anmeldenummer: **21185081.3** | (52) Gemeinsame Patentklassifikation (CPC):<br>**F16K 5/0689; F01P 7/16; F16K 5/0668;**<br>**F16K 5/201;** F01P 2007/146 |
| (22) Anmeldetag: **12.07.2021** | |

(54) **DICHTUNGSANORDNUNG FÜR EINE STEUERVORRICHTUNG FÜR DEN KÜHLMITTELFLUSS IN EINEM KÜHLKREISLAUF EINES FAHRZEUGS**

SEALING ARRANGEMENT FOR A CONTROL DEVICE FOR THE FLOW OF COOLANT IN A COOLING CIRCUIT OF A VEHICLE

DISPOSITIF D'ÉTANCHÉITÉ POUR UN DISPOSITIF DE COMMANDE POUR L'ÉCOULEMENT DE FLUIDE DE REFROIDISSEMENT DANS UN CIRCUIT DE REFROIDISSEMENT D'UN VÉHICULE

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR** | • **Fleisch, Nico**<br>**Oberboihingen (DE)**<br>• **Schuchter, Johannes**<br>**Oberboihingen (DE)** |
| (30) Priorität: **15.07.2020 DE 102020118731** | (74) Vertreter: **Twelmeier Mommer & Partner Patent- und Rechtsanwälte mbB Westliche Karl-Friedrich-Straße 56-68 75172 Pforzheim (DE)** |
| (43) Veröffentlichungstag der Anmeldung:<br>**19.01.2022 Patentblatt 2022/03** | |
| (73) Patentinhaber: **Thermal Management Solutions DE Oberboihingen GmbH 72644 Oberboihingen (DE)** | (56) Entgegenhaltungen:<br>DE-A1-102009 025 341    US-A- 5 315 200<br>US-A1- 2018 099 086 |
| (72) Erfinder:<br>• **Ulm, Waldemar**<br>**Oberboihingen (DE)** | |

**Beschreibung**

Die vorliegende Erfindung geht aus von einer Dichtungsanordnung mit den im Obergriff des Anspruchs 1 genannten Merkmalen. Die Dichtungsanordnung wird in eine Steuervorrichtung, beispielsweise ein elektrisch angetriebenes Steuerventil, eingesetzt, um den Kühlmittelfluss in einem Fahrzeug zu steuern. Insbesondere kann der Kühlmittelfluss durch eine Brennkraftmaschine gesteuert werden, und zwar um in deren Kühlkreislauf je nach Lastfall eine optimale Kühlmitteltemperatur zu gewährleisten. Die Dichtungsanordnung kann jedoch auch in einer Steuervorrichtung eingesetzt werden, um den Kühlmittelfluss durch eine Batterie eines elektrisch angetriebenen Fahrzeugs zu steuern. Die Erfindung betrifft auch eine Steuervorrichtung mit einer solchen Dichtungsanordnung.

Eine Dichtungsanordnung der eingangs genannten Art ist aus DE 10 2014 219 460 A1 bekannt. Die bekannte Dichtungsanordnung enthält einen Dichtungsrahmen, ein Stützelement und eine zwischen dem Dichtungsrahmen und dem Stützelement angeordnete Feder. Das Stützelement stützt sich an einem Gehäuse der Steuervorrichtung ab. Die Feder drückt den Dichtungsrahmen an ein Steuerelement, welches bewegbar im Gehäuse der Steuervorrichtung angeordnet ist und den durchströmbaren Kanalquerschnitt verändern kann. Die Feder besteht aus einem Federpaket mit mehreren aufeinander geschichteten Tellerfedern.

Aus der DE 10 2014 202 589 A1 ist eine Dichtungsanordnung für eine Steuervorrichtung für den Kühlmittelfluss in einem Kühlkreislauf einer

Brennkraftmaschine bekannt, in welcher ein Dichtungsrahmen mittels einer Schraubenfeder an ein bewegbares Steuerelement der Steuervorrichtung andrückbar ist.

Aus DE 10 2015 218 391 A1 ist eine Dichtungsanordnung mit einem Dichtungsrahmen bekannt, welcher von einem Ring aus einem Elastomer, beispielsweise einem Kautschuk, federelastisch an ein bewegbares Steuerelement einer Steuervorrichtung andrückbar ist.

In US 5,315,200 A ist eine Anordnung zum Sichern eines Stators in einer dynamoelektrischen Maschine offenbart. Die dynamoelektrische Maschine enthält ein Gehäuse für den Stator und eine wellenförmige Feder, welche an einem Ende des Stators zwischen dem Gehäuse und dem Stator angeordnet ist. Die wellenförmige Feder wird komprimiert, um den Stator in einer fixen Position im Gehäuse zu sichern.

Die bekannten Federn haben Nachteile: Die elastischen Eigenschaften eines Elastomers können sich durch äußere Einflüsse im Laufe der Lebensdauer verändern, sodass sich auch die Federkraft, mit welcher der Dichtungsrahmen an das Steuerelement der Steuervorrichtung angepresst wird, im Laufe der Zeit verändern kann. Die bekannten Metallfedern sind aufwendig in der Herstellung und relativ teuer. Außerdem benötigen sie einen relativ großen Bauraum.

Eine ähnliche Dichtungsanordnung ist auch aus DE 10 2009 025341 A1 gemäß der Präambel von Anspruch 1 bekannt.

Der Erfindung liegt die Aufgabe zugrunde, eine Dichtungsanordnung der eingangs genannten Art zu verbessern und eine verbesserte Steuervorrichtung zu schaffen. Diese Aufgabe wird durch eine Dichtungsanordnung mit den Merkmalen des Anspruchs 1 und eine Steuervorrichtung mit den Merkmalen des Anspruchs 12 gelöst. Vorteilhafte Weiterbildungen sind Gegenstand der Unteransprüche.

Die erfindungsgemäße Steuervorrichtung ist für den Einsatz in einem Kühlkreislauf eines Fahrzeugs ausgestaltet, um den Kühlmittelfluss zu steuern, insbesondere durch eine Brennkraftmaschine und/oder durch eine Batterie und/oder durch einen Wärmetauscher zur Abgabe von Wärme aus dem Kühlmittel an die Umgebungsluft und/oder durch einen Wärmetauscher zur Erwärmung der Luft im Fahrzeuginnenraum. Die Steuervorrichtung hat ein Gehäuse mit wenigstens zwei Öffnungen und zumindest einem von der einen zur der anderen Öffnung verlaufenden Strömungspfad und/oder Strömungskanal. Im Gehäuse ist ein bewegbares Steuerelement zum Verändern eines durchströmbaren Kanalquerschnitts angeordnet. In Schließstellung des Steuerelements ist der Strömungskanal versperrt. In Offenstellung des Steuerelements kann Kühlmittel von der einen zu anderen Öffnung durch das Gehäuse der Steuervorrichtung fließen. Das Steuerelement hat eine Dichtfläche, welche zylinder- oder kugelförmig sein kann. Das Steuerelement kann um eine Drehachse im Gehäuse der Steuervorrichtung drehbar gelagert sein. Eine Steuervorrichtung mit einem solchen Steuerelement wird auch als "Drehschieber" bezeichnet. Das Steuerelement kann insbesondere zwischen zwei Endstellungen im Gehäuse hin und her drehbar sein, wobei es auch Stellungen zwischen den beiden Endstellungen einnehmen kann.

Die erfindungsgemäße Dichtungsanordnung enthält einen Dichtungsrahmen, ein Stützelement und eine zwischen dem Dichtungsrahmen und dem Stützelement angeordnete Feder. Die Feder ist eine Federscheibe, welche insbesondere im entspannten Zustand eben ist. Sie kann ringförmig sein. Die Dichtungsanordnung kann ringförmig sein. Sie kann an einer Öffnung im Gehäuse der Steuervorrichtung angeordnet werden. Es kann sich dabei um die für das Einströmen von Kühlmittel in die Steuervorrichtung vorgesehene Öffnung oder die für das Ausströmen von Kühlmittel aus der Steuervorrichtung vorgesehene Öffnung handeln. Das Stützelement sitzt ortsfest im Gehäuse der Steuervorrichtung und stützt sich daran ab. Der Dichtungsrahmen hat eine Dichtfläche, welche von der Federscheibe an eine Dichtfläche des Steuerelements angedrückt wird und dort dichtend anliegt. Die Dichtfläche ist ringförmig. Die Dichtfläche des Dichtungsrahmens kann an die Außenform des Steuerelements angepasst sein. Die ringförmige Dichtfläche kann sich durchgehend entlang des gesamten Umfangs des Dichtungsrahmens erstrecken, um eine möglichst leckagefreie Abdichtung zu bewirken, wenn sich das Steuerelement in seiner Schließstellung befindet. Die Dichtfläche kann insbesondere einteilig mit dem Dichtrahmen sein.

Der Dichtungsrahmen weist auf der seiner Dichtfläche abgewandten Seite wenigstens zwei Federauflagen mit einem dazwischen angeordneten Zwischenraum auf. Jede der Federauflagen kann zahnartig ausgebildet sein. Das Stützelement weist auf seiner dem Dichtungsrahmen zugewandten Seite wenigstens eine Federauflage auf. Die Federscheibe steht sowohl mit den Federauflagen des Dichtungsrahmens als auch mit der Federauflage des Stützelements in Kontakt. Wird der Dichtungsrahmen an das Stützelement angenähert, wird die Federscheibe wellenförmig verformt und ihre Rückstellkraft hat das Bestreben den Dichtungsrahmen vom Stützelement weg zu drücken. Beim Annähern des Dichtungsrahmens an das Stützelement taucht die wenigstens eine Federauflage des Stützelements in den Zwischenraum des Dichtungsrahmens ein.

Die Erfindung hat wesentliche Vorteile:

- Die erfindungsgemäße Dichtungsanordnung stellt eine dynamische Dichtung für eine Steuervorrichtung, insbesondere einen Drehschieber, bereit, welche über die gesamte Lebensdauer eine sichere Abdichtung des Strömungskanals sicherstellt.
- Der Dichtungsrahmen und das Stützelement mit ihren Federauflagen lassen sich sehr einfach als Spritzgussteile herstellen.
- Die Anpresskraft des Dichtungsrahmens an das Steuerelement kann durch die Formgestaltung der Federauflagen sehr einfach so ausgelegt werden, dass sie über die Lebensdauer ausreichend hoch ist, um den Kühlmitteldruck abzudichten, aber gleichzeitig nicht übermäßig hoch ist, sodass die Dichtungsanordnung sehr leichtgängig ist und gut auf dem bewegbaren Steuerelement gleitet. Hierdurch lässt sich der Antrieb des Steuerelements klein und einfach auslegen.
- Die erfindungsgemäße Dichtungsanordnung benötigt sehr wenig Bauraum. Insbesondere die vom Dichtungsrahmen über die Federscheibe und das Stützelement gemessene Gesamthöhe ist sehr gering.
- Die Federscheibe lässt sich mit sehr geringen Fertigungstoleranzen sehr einfach herstellen, beispielsweise aus einem Federstahl. Gut geeignet ist ein Federstahl mit der Werkstoffnummer 1.4310 (X 10 Cr Ni 18 8). Die insbesondere ebene Federscheibe kann sehr einfach durch Zuschneiden eines Blechs oder Ausstanzen hergestellt werden.
- Die Federscheibe kann dabei aufgrund ihrer flachen Federkennlinie auch problemlos die Fertigungstoleranzen der Einzelteile der Steuervorrichtung ausgleichen, ohne das die Anpresskraft des Dichtungsrahmens am Steuerelement zu stark variiert.
- Über die gesamte Lebensdauer und den gesamten Temperaturbereich kann eine nahezu konstante Anpresskraft des Dichtungsrahmens an das Steuerelement der Steuervorrichtung gewährleistet werden.
- Die Dichtungsanordnung besteht aus sehr wenigen Teilen und lässt sich sehr einfach montieren.

In Ausgestaltung der Erfindung kann der Dichtungsrahmen wenigstens zwei Federauflagen und wenigstens zwei Zwischenräume als auch das Stützelement wenigstens zwei Federauflagen und wenigstens zwei Zwischenräume aufweisen, welche abwechselnd entlang des Umfangs des Dichtungsrahmens angeordnet sind. Die Federscheibe kann sowohl mit allen Federauflagen des Stützelements als auch mit allen Federauflagen des Dichtungsrahmens in Kontakt stehen. Jede der Federauflagen des Stützelements kann in einen Zwischenraum des Dichtungsrahmens und jede der Federauflagen des Dichtungsrahmens kann in einen Zwischenraum des Stützelements eintauchen, wenn sich der Dichtungsrahmen und das Stützelement einander annähern. Die Federauflagen am Dichtungsrahmen bzw. am Stützelement sind entlang des Umfangs versetzt zueinander angeordnet, sodass eine Federauflage jeweils einem Zwischenraum gegenüberliegt. Der Dichtungsrahmen kann insbesondere wenigstens drei Federauflagen und wenigstens drei Zwischenräume aufweisen. Das Stützelement und der Dichtungsrahmen können jeweils dieselbe Anzahl von Federauflagen und Zwischenräumen aufweisen. Insbesondere kann jeder Abstand zwischen zwei benachbarten Federauflagen des Dichtungsrahmens gleich groß sein. Auch die Abstände zwischen zwei benachbarten Federauflagen des Stützelements können gleich groß sein.

In weiterer Ausgestaltung kann jede der Federauflagen des Dichtungsrahmens konvex sein. Sie kann schräg zu einer auf die Federauflagen des Dichtungsrahmens aufgelegten Referenzebene verlaufen. Jede der Federauflagen des Dichtungsrahmens kann auf der dem Stützelement abgewandten Seite der Referenzebene einen sich verändernden Abstand zu der Referenzebene aufweisen. Dieser Abstand ist in einem durch den Dichtungsrahmen gelegten Schnitt gesehen an einer Stelle nahe des inneren Umfangs des Dichtungsrahmens größer als an einer Stelle nahe des äußeren Umfangs des Dichtungsrahmens. Der vorgenannte Schnitt durch den Dichtungsrahmen verläuft dabei senkrecht zur Referenzebene und quer zur Umfangsrichtung des Dichtungsrahmens. Jede Federauflage fällt somit in einer Richtung zur Mitte des Dichtungsrahmens und zu seiner Dichtfläche hin ab. Durch diese Ausgestaltung kann ein besonders guter Kontakt der Federauflagen zu der Federscheibe gewährleistet werden, auch wenn sich die Federscheibe durch ihre Auslenkung S in verschiedene Richtungen verformt.

In weiterer Ausgestaltung kann jede der Federauflagen des Stützelements konvex sein. Sie kann schräg zu einer auf die Federauflagen des Stützelements aufgelegten Referenzebene verlaufen. Jede der Federauflagen des Stützelements kann auf der dem Dichtungsrahmen abgewandten Seite der Referenzebene - in einem durch das Stützelement gelegten Schnitt gesehen, welcher senkrecht zur Referenzebene und quer zu der Umfangsrichtung des Dichtungsrahmens verläuft - an einer Stelle nahe des inneren Umfangs des Dichtungsrahmens einen größeren Abstand zur Referenzebene als an einer Stelle nahe des äußeren Umfangs des Dichtungsrahmens aufweisen.

Die Dichtungsanordnung kann eine zylindrische Führung für den Dichtungsrahmen enthalten. Das Stützelement kann ringförmig sein. Die zylindrische Führung kann als zylindrischer Fortsatz an dem Stützelement ausgebildet sein. Der Dichtungsrahmen kann an seinem äußeren Umfang eine zylindrische Gleitfläche aufweisen, welche in der zylindrischen Führung gleiten kann.

Eine besonders günstige Ausgestaltung der Dichtungsanordnung kann erreicht werden, wenn eine aus verschiedenen Abmessungen der Dichtungsanordnung berechnete Verhältniszahl a im Bereich von 0,001 bis 0,02, insbesondere im Bereich von 0,002 bis 0,01, liegt. Die Verhältniszahl a ist dimensionslos und wird aus der Dicke t der Federscheibe und dem Abstand L zwischen zwei benachbarten Federauflagen, also dem Abstand von einer Federauflage des Dichtungsrahmens zu der nächstliegenden Federauflage des Stützelements, gebildet. Darüber hinaus wird bei der Berechnung die Auslenkung S der Federscheibe berücksichtigt, um welche die Federscheibe im Betriebszustand der Dichtungsanordnung gegenüber ihrem Ruhezustand verformt ist. Die Verhältniszahl a ist das Produkt aus der Dicke t der Federscheibe und ihrer Auslenkung S dividiert durch das Quadrat des Abstandes L, in Formelschreibweise:

$$a = S \times t / (L)^2$$

Weitere Vorteile und Merkmale der Erfindung ergeben sich aus der Beschreibung einiger Ausführungsbeispiele in Verbindung mit den Figuren. Es zeigen:

Figur 1    eine teilweise geschnittene Ansicht eines Teils einer erfindungsgemäßen Steuervorrichtung

Figur 2    die Steuervorrichtung der Figur 1 in einer anderen Perspektive,

Figur 3    eine schematische Ansicht einer erfindungsgemäßen Dichtungsanordnung mit einer Federscheibe im Ruhezustand,

Figur 4    die Dichtungsanordnung der Figur 3 im ausgelenkten Zustand der Federscheibe,

Figur 5    einen vergrößert dargestellten Schnitt durch die Dichtungsanordnung entlang der in Figur 4 angedeuteten Schnittebene V-V,

Figur 6    einen vergrößert dargestellten Schnitt durch die Dichtungsanordnung entlang der in Figur 4 angedeuteten Schnittebene VI-VI,

Figur 7    eine perspektivische Ansicht eines erfindungsgemäßen Dichtungsrahmens.

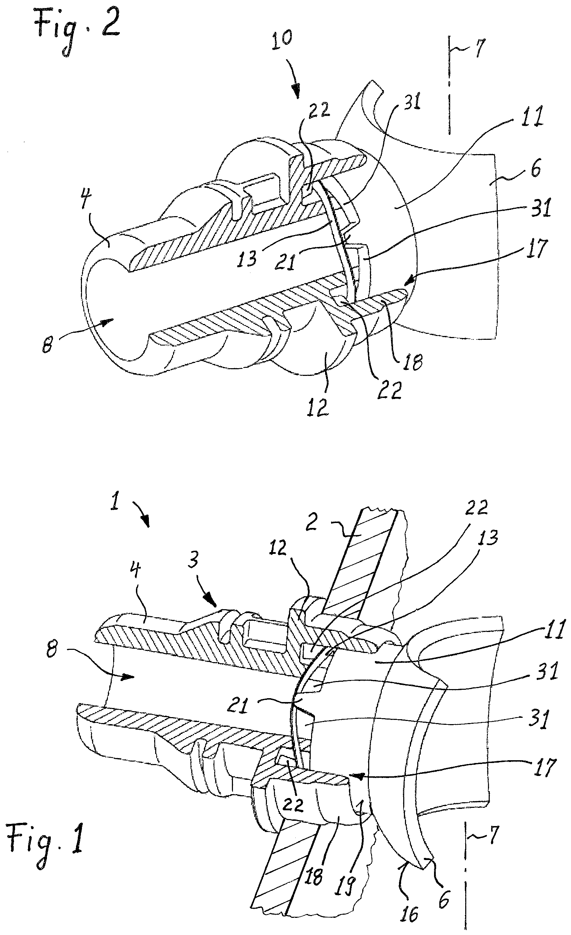

In den Figuren 1 und 2 ist ein Ausschnitt aus einer erfindungsgemäßen Steuervorrichtung 1 für einen Kühlmittelfluss in einem Kühlkreislauf eines Kraftfahrzeugs dargestellt. Die Steuervorrichtung 1 ist ein Drehschieber und enthält ein Gehäuse 2 mit einer Öffnung 3 und einem Kühlmittelanschlussstutzen 4. In dem Gehäuse 2 ist ein bewegbares Steuerelement 6 angeordnet. Das Steuerelement 6 ist in seiner Schließstellung dargestellt und kann um eine Drehachse 7 in eine Offenstellung verschwenkt werden. Das Steuerelement 6 kann in an sich bekannter, nicht dargestellter Weise im Gehäuse 2 gelagert und mit einem Drehantrieb gekoppelt sein. Durch das Gehäuse 2, die Öffnung 3 und den Kühlmittelanschlussstutzen 4 erstreckt sich ein Strömungskanal 8, durch welchen Kühlmittel in das Gehäuse 2 hinein oder aus dem Gehäuse 2 herausströmen kann.

Die Steuervorrichtung 1 enthält eine ringförmige Dichtungsanordnung 10 mit einem Dichtungsrahmen 11, einem Stützelement 12 und einer dazwischen angeordneten Federscheibe 13. Das Stützelement 12 ist ortsfest im Gehäuse 2 angeordnet. Das Stützelement 12 ist im dargestellten Ausführungsbeispiel einstückig mit dem Kühlmittelanschlussstutzen 4 als Spritzgussteil ausgestaltet. Der Dichtungsrahmen 11 und das Stützelement 12 sind ringförmig und umgeben den Strömungskanal 8. Das Steuerelement 6 hat eine kugelförmige Dichtfläche 16. Eine Oberfläche des Dichtungsrahmens 11 bildet eine Dichtfläche 15 aus, deren Form an die Dichtfläche 16 angepasst ist. Die Dichtfläche 15 wird von der Federscheibe 13 an die Dichtfläche 16 angedrückt. Der Dichtungsrahmen 11 liegt somit dichtend am Steuerelement 6 an, sodass der Strömungskanal 8 in Schließstellung des Steuerelements 6 flüssigkeitsdicht verschlossen ist. Beim Verschwenken des Steuerelements 6 um die Drehachse 7 gleitet die Dichtfläche 16 über die Dichtfläche 15. In seiner Offenstellung gibt das Steuerelement 6 zumindest einen Teil des Querschnitts des Strömungskanals 8 frei.

Die Dichtungsanordnung 10 enthält eine zylindrische Führung 17 für den Dichtungsrahmen 11. Die Führung 17 ist als zylindrischer Fortsatz 18 am Stützelement 12 ausgebildet. Der Dichtungsrahmen 11 enthält eine zylindrische Gleitfläche 19, mit welcher er in dem zylindrischen Fortsatz 18 gleiten kann. In nicht dargestellter, an sich bekannter Weise kann der Dichtungsrahmen 11 mit seiner zylindrischen Gleitfläche 19 zu dem zylindrischen Fortsatz 18 abgedichtet sein, beispielsweise durch einen zusätzlichen Dichtring (nicht dargestellt).

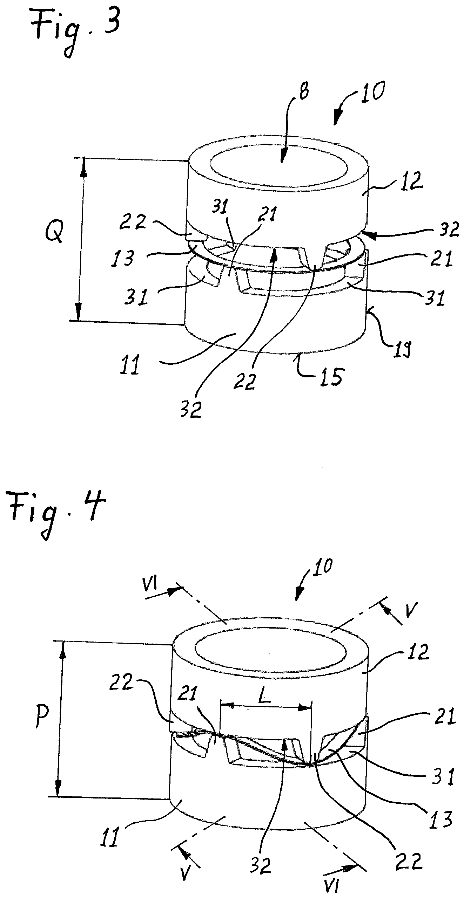

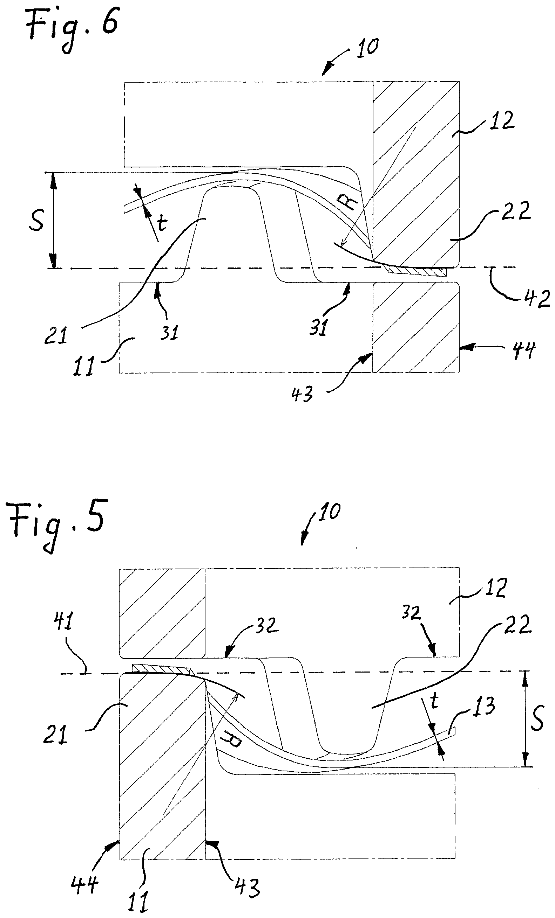

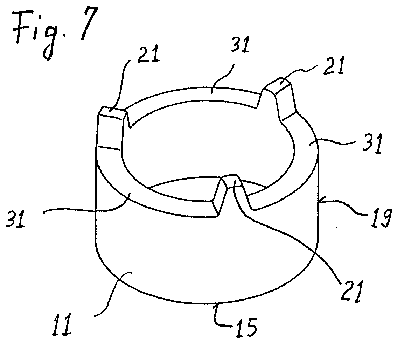

In den Figuren 3 bis 7 ist erkennbar, dass der Dichtungsrahmen 11 drei Federauflagen 21 aufweist, welche zueinander denselben Abstand aufweisen. Zwischen zwei Federauflagen 21 ist jeweils ein Zwischenraum 31 vorgesehen. Das Stützelement 12 hat drei in gleicher Weise, aber umgekehrter Orientierung, ausgestaltete Federauflagen 22, welche jeweils ebenfalls denselben Abstand zueinander aufweisen. Zwischen zwei Federauflagen 22 ist wiederum jeweils ein Zwischenraum 32 vorgesehen. In ihrem entspannten Zustand, siehe Figur 3, liegt die ebene Federscheibe 13 zwischen dem Dichtungsrahmen 11 und dem Stützelement 12, wobei die Federscheibe 13 abwechselnd mit den Federauflagen 21 und 22 in Kontakt steht. Der Abstand L von einer Federauflage 21 zu der nächstliegenden Federauflage 22 ist ebenfalls für alle Federauflagen 21, 22 gleich groß. Zum Einbau der Dichtungsanordnung 10 in die Steuervorrichtung 1 wird der Abstand zwischen der Dichtungsanordnung 11 und dem Stützelement 12 verringert, wobei die Federscheibe 13 um die Auslenkung S verformt wird. Die Höhe Q der Dichtungsanordnung 1 im Ruhezustand, siehe Figur 3, verringert sich dabei auf die Höhe P, siehe Figur 4. Die Federscheibe 13 wird dabei in Form einer Welle verformt. Die Auslenkung S, um welche die Federscheibe 13 verformt wird, ergibt sich aus der Differenz der Maße Q und P, siehe auch Figuren 5 und 6.

Auf die drei Federauflagen 21 des Dichtungsrahmens 11 lässt sich eine Referenzebene 41 auflegen, welche in Figur 5 gestrichelt eingezeichnet ist. Die konvexen Federauflagen 21 verlaufen schräg zu der Referenzebene 41, beispielsweise gekrümmt entlang eines Radius R. Die Schnittebene V-V der Figur 5 verläuft senkrecht zur Referenzebene 41 und quer zu der Umfangsrichtung des Dichtungsrahmens 11, siehe auch Figur 4. Auf einer dem Stützelement 12 abgewandten Seite der Referenzebene 41 weist jede Federauflage 21 nahe des inneren Umfangs 43 des Dichtungsrahmens 11 einen größeren Abstand zu der Referenzebene 41 auf als nahe des äußeren Umfangs 44 des Dichtungsrahmens 11.

Auf die drei Federauflagen 22 des Stützelements 12 lässt sich eine Referenzebene 42 auflegen, welche in Figur 6 gestrichelt eingezeichnet ist. Die konvexen Federauflagen 22 verlaufen schräg zu der Referenzebene 42, beispielsweise gekrümmt entlang eines Radius R. Die Schnittebene VI-VI der Figur 6 verläuft senkrecht zur Referenzebene (42) und quer zu der Umfangsrichtung des Dichtungsrahmens 11, siehe auch Figur 4. Auf einer dem Dichtungsrahmen 11 abgewandten Seite der Referenzebene 42 weist jede Federauflage 22 nahe des inneren Umfangs 43 des Dichtungsrahmens 11 einen größeren Abstand zu der Referenzebene 42 auf als nahe des äußeren Umfangs 44 des Dichtungsrahmens 11.

Die Federscheibe 13 hat eine Dicke t. Aus der Dicke t der Federscheibe 13, ihrer Auslenkung S und dem Abstand L von einer der Federauflagen 21 zu der nächstliegenden Federauflage 22 lässt sich mit der oben genannten Formel eine Verhältniszahl a berechnen. Diese liegt bei dem in den Figuren 5 und 6 dargestellten Ausführungsbeispiel im Bereich von 0,0012 bis 0,013.

**Bezugszeichenliste**

| 1 | Steuervorrichtung | a | Verhältniszahl |
|---|---|---|---|
| 2 | Gehäuse | L | Abstand |
| 3 | Öffnung | P | Höhe |
| 4 | Kühlmittelanschlussstutzen | Q | Höhe |
| 6 | Steuerelement | R | Radius |
| 7 | Drehachse | S | Auslenkung |
| 8 | Strömungskanal | t | Dicke |
| 10 | Dichtungsanordnung | | |
| 11 | Dichtungsrahmen | | |
| 12 | Stützelement | | |
| 13 | Federscheibe | | |
| 15 | Dichtfläche | | |

(fortgesetzt)

| 16 | Dichtfläche |
|----|-------------|
| 17 | zylindrische Führung |
| 18 | zylindrischer Fortsatz |
| 19 | zylindrische Gleitfläche |
| 21 | Federauflage |
| 22 | Federauflage |
| 31 | Zwischenraum |
| 32 | Zwischenraum |
| 41 | Referenzebene |
| 42 | Referenzebene |
| 43 | innerer Umfang |
| 44 | äußerer Umfang |

**Patentansprüche**

1. Dichtungsanordnung (10) für eine Steuervorrichtung (1) für den Kühlmittelfluss in einem Kühlkreislauf eines Fahrzeugs mit einem Dichtungsrahmen (11), einem Stützelement (12) und einer zwischen dem Dichtungsrahmen (11) und dem Stützelement (12) angeordneten Feder (13),

   wobei der Dichtungsrahmen (11) eine von der Feder (13) an ein bewegbares Steuerelement (6) der Steuervorrichtung (1) andrückbare ringförmige Dichtfläche (15) aufweist,
   **dadurch gekennzeichnet,**
   **dass** der Dichtungsrahmen (11) auf der seiner Dichtfläche (15) abgewandten Seite wenigstens zwei Federauflagen (21) mit einem dazwischen angeordneten Zwischenraum (31) aufweist,
   **dass** das Stützelement (12) auf seiner dem Dichtungsrahmen (11) zugewandten Seite wenigstens eine Federauflage (22) aufweist, welche in den wenigstens einen Zwischenraum (31) des Dichtungsrahmens (11) eintaucht, wenn sich der Dichtungsrahmen (11) und das Stützelement (12) einander annähern,
   und **dass** die Feder eine Federscheibe (13) ist, welche sowohl mit den Federauflagen (21) des Dichtungsrahmens (11) als auch mit der wenigstens einen Federauflage (22) des Stützelements (12) in Kontakt steht.

2. Dichtungsanordnung nach einem der vorstehenden Ansprüche, in welchem die Federscheibe (13) im entspannten Zustand eben ist.

3. Dichtungsanordnung nach einem der vorstehenden Ansprüche, bei welcher sowohl der Dichtungsrahmen (11) wenigstens zwei Federauflagen (21) und wenigstens zwei Zwischenräume (31) als auch das Stützelement (12) wenigstens zwei Federauflagen (22) und wenigstens zwei Zwischenräume (32) aufweist, welche jeweils abwechselnd entlang des Umfangs (43; 44) des Dichtungsrahmens (11) angeordnet sind.

4. Dichtungsanordnung nach einem der vorstehenden Ansprüche, in welcher der Dichtungsrahmen (11) wenigstens drei Federauflagen (21) und wenigstens drei Zwischenräume (31) aufweist.

5. Dichtungsanordnung nach Anspruch 3 oder 4, bei welcher das Stützelement (12) und der Dichtungsrahmen (11) jeweils dieselbe Anzahl von Federauflagen (21; 22) und Zwischenräumen (21; 32) aufweisen.

6. Dichtungsanordnung nach einem der vorstehenden Ansprüche, in welcher alle Abstände zwischen zwei benachbarten Federauflagen (21) des Dichtungsrahmens (11) gleich groß sind.

7. Dichtungsanordnung nach einem der vorstehenden Ansprüche, in welcher jede der Federauflagen (21) des Dichtungsrahmens (11) schräg zu einer auf die Federauflagen (21) des Dichtungsrahmens (11) aufgelegten Referenzebene (41) verläuft.

8. Dichtungsanordnung nach Anspruch 7, in welcher jede der Federauflagen (21) des Dichtungsrahmens (11) auf der dem Stützelement (12) abgewandten Seite der Referenzebene (41) - in einem durch den Dichtungsrahmen (11) gelegten Schnitt gesehen, welcher senkrecht zur Referenzebene (41) und quer zu der Umfangsrichtung des Dichtungsrahmens (11) verläuft - an einer Stelle nahe des inneren Umfangs (43) des Dichtungsrahmens (11) einen größeren Abstand zu der Referenzebene (41) als an einer Stelle nahe des äußeren Umfangs (44) des Dichtungsrahmens (11) aufweist.

9. Dichtungsanordnung nach einem der vorstehenden Ansprüche, in welcher jede der Federauflagen (22) des Stützelements (12) schräg zu einer auf die Federauflagen (22) des Stützelements (12) aufgelegten Referenzebene (42) verläuft.

10. Dichtungsanordnung nach Anspruch 9, in welcher jede der Federauflagen (22) des Stützelements (12) auf der dem Dichtungsrahmen (11) abgewandten Seite der Referenzebene (42) - in einem durch das Stützelement (12) gelegten Schnitt gesehen, welcher senkrecht zur Referenzebene (42) und quer zu der Umfangsrichtung des Dichtungsrahmen (11) verläuft - an einer Stelle nahe des inneren Umfangs (43) des Dichtungsrahmens (11) einen größeren Abstand zur Referenzebene (42) als an einer Stelle nahe des äußeren Umfangs (44) des Dichtungsrahmens (11) aufweist.

11. Dichtungsanordnung nach einem der vorstehenden Ansprüche, bei welcher eine dimensionslose Verhältniszahl (a) im Bereich von 0,001 bis 0,02, insbesondere im Bereich von 0,002 bis 0,01, liegt, wobei die Verhältniszahl (a) das Produkt aus der Dicke (t) der Federscheibe (13) und der Auslenkung (S) der Federscheibe (13) im Betriebszustand dividiert durch das Quadrat des Abstandes (L) von einer der Federauflagen (21) des Dichtungsrahmens (11) zu der nächstliegenden Federauflage (22) des Stützelements (12) ist.

12. Steuervorrichtung (1) für den Kühlmittelfluss in einem Kühlkreislauf eines Fahrzeugs mit einem Gehäuse (2) und einem darin bewegbaren Steuerelement (6) zum Verändern eines durchströmbaren Kanalquerschnitts, **dadurch gekennzeichnet, dass** im Gehäuse (2) eine Dichtungsanordnung (10) nach einem der Ansprüche 1 bis 11 angeordnet ist, deren Dichtungsrahmen (11) mit seiner Dichtfläche (15) durch die Federscheibe (13) an eine Dichtfläche (16) des Steuerelements (6) angedrückt wird und dort dichtend anliegt.

**Claims**

1. A sealing arrangement (10) for a control device (1) for the flow of coolant in a cooling circuit of a vehicle, comprising a sealing frame (11), a support element (12) and a spring (13) arranged between the sealing frame (11) and the support element (12), wherein

   the sealing frame (11) has an annular sealing surface (15) which can be pressed by the spring (13) against a movable control element (6) of the control device (1),
   **characterised in that**
   the sealing frame (11) has, on the side opposite its sealing surface (15), at least two spring supports (21) with an intermediate space (31) arranged between them,
   the support element (12) has, on its side facing the sealing frame (11), at least one spring support (22) which enters into the at least one intermediate space (31) of the sealing frame (11) when the sealing frame (11) and the support element (12) move towards each other,
   and the spring is a spring washer (13) which is in contact both with the spring supports (21) of the sealing frame (11) and with said at least one spring support (22) of the support element (12).

2. Sealing arrangement according to any one of the preceding claims, wherein the spring washer (13) is planar in the relaxed state.

3. Sealing arrangement according to any one of the preceding claims, wherein both the sealing frame (11) comprises at least two spring supports (21) and at least two intermediate spaces (31), and the support element (12) comprises at least two spring supports (22) and at least two intermediate spaces (32), each arranged alternately along the periphery (43; 44) of the sealing frame (11).

4. Sealing arrangement according to any one of the preceding claims, wherein the sealing frame (11) comprises at least three spring supports (21) and at least three intermediate spaces (31).

5. Sealing arrangement according to claim 3 or 4, wherein the support element (12) and the sealing frame (11) each have the same number of spring supports (21; 22) and intermediate spaces (21; 32).

6. Sealing arrangement according to any one of the preceding claims, wherein all the distances between two adjacent spring supports (21) of the sealing frame (11) are equal.

7. Sealing arrangement according to any one of the preceding claims, wherein each of the spring supports (21) of the sealing frame (11) is inclined with respect to a reference plane (41) positioned onto the spring supports (21) of the sealing frame (11).

8. Sealing arrangement according to claim 7, wherein each of the spring supports (21) of the sealing frame (11) on the side of the reference plane (41) opposite the support element (12) - seen in a section passing through the sealing frame (11), which extends perpendicularly to the reference plane (41) and transversely to the circumferential direction of the sealing frame (11) - has a greater distance from the reference plane (41) at a point close to the inner circumference (43) of the sealing frame (11) than at a point close to the outer circumference (44) of the sealing frame (11).

9. Sealing arrangement according to any one of the preceding claims, wherein each of the spring supports (22) of the support element (12) is inclined relative to a reference plane (42) positioned onto the spring supports (22) of the support element (12).

10. Sealing arrangement according to claim 9, in which each of the spring supports (22) of the support element (12) on the side of the reference plane (42) opposite the sealing frame (11) - seen in a section passing through the support element (12), which extends perpendicularly to the reference plane (42) and transversely to the circumferential direction of the sealing frame (11) - has a greater distance from the reference plane (42) at a point close to the inner circumference (43) of the sealing frame (11) than at a point close to the outer circumference (44) of the sealing frame (11).

11. Sealing arrangement according to any of the preceding claims, wherein a dimensionless ratio number (a) is in the range from 0.001 to 0.02, in particular in the range from 0.002 to 0.01, the ratio number (a) being the product of the thickness (t) of the spring washer (13) and the deflection (S) of the spring washer (13) in the operating state, divided by the square of the distance (L) between one of the spring supports (21) of the sealing frame (11) and the closest spring support (22) of the support element (12).

12. A control device (1) for the flow of a coolant in a cooling circuit of a vehicle, comprising a housing (2) and a control element (6) movable therein for changing a channel cross-section through which flow can take place, **characterised in that** sealing arrangement (10) according to one of claims 1 to 11 is arranged in the housing (2), the sealing frame (11) of which is pressed with its sealing surface (15) by the spring washer (13) against a sealing surface (16) of the control element (6) and bears sealingly against the latter.

**Revendications**

1. Agencement d'étanchéité (10) pour un dispositif de commande (1) pour l'écoulement de réfrigérant dans un circuit de refroidissement d'un véhicule, comprenant un cadre d'étanchéité (11), un élément d'appui (12) et un ressort (13) disposé entre le cadre d'étanchéité (11) et l'élément d'appui (12),

   le cadre d'étanchéité (11) présentant une surface d'étanchéité (15) annulaire pouvant être pressée par le ressort (13) contre un élément de commande (6) mobile du dispositif de commande (1),
   **caractérisé en ce**
   **que** le cadre d'étanchéité (11) présente, sur le côté opposé à sa surface d'étanchéité (15), au moins deux appuis de ressort (21) avec un espace intermédiaire (31) disposé entre eux,
   **que** l'élément d'appui (12) présente, sur son côté tourné vers le cadre d'étanchéité (11), au moins un appui de ressort (22) qui entre dans ledit au moins un espace intermédiaire (31) du cadre d'étanchéité (11) lorsque le cadre d'étanchéité (11) et l'élément d'appui (12) se rapprochent l'un de l'autre,
   et **que** le ressort est une rondelle élastique (13) qui est en contact à la fois avec les appuis de ressort (21) du cadre d'étanchéité (11) et avec ledit au moins un appui de ressort (22) de l'élément d'appui (12).

2. Agencement d'étanchéité selon l'une quelconque des revendications précédentes, dans lequel la rondelle élastique (13) est plane à l'état détendu.

3. Agencement d'étanchéité selon l'une quelconque des revendications précédentes, dans lequel à la fois le cadre d'étanchéité (11) comprend au moins deux appuis de ressort (21) et au moins deux espaces intermédiaires (31), et l'élément d'appui (12) comprend au moins deux appuis de ressort (22) et au moins deux espaces intermédiaires (32), chacun étant disposé en alternance le long de la périphérie (43 ; 44) du cadre d'étanchéité (11).

4. Agencement d'étanchéité selon l'une quelconque des revendications précédentes, dans lequel le cadre d'étanchéité (11) comprend au moins trois appuis de ressort (21) et au moins trois espaces intermédiaires (31).

5. Agencement d'étanchéité selon le revendication 3 ou 4, dans lequel l'élément d'appui (12) et le cadre d'étanchéité (11) présentent chacun le même nombre d'appuis de ressort (21 ; 22) et d'espaces intermédiaires (21 ; 32).

6. Agencement d'étanchéité selon l'une quelconque des revendications précédentes, dans lequel toutes les distances entre deux appuis de ressort (21) adjacents du cadre d'étanchéité (11) sont égales.

7. Agencement d'étanchéité selon l'une quelconque des revendications précédentes, dans lequel chacun des appuis de ressort (21) du cadre d'étanchéité (11) est incliné par rapport à un plan de référence (41) positionné sur les appuis de ressort (21) du cadre d'étanchéité (11).

8. Agencement d'étanchéité selon la revendication 7, dans lequel chacun des appuis de ressort (21) du cadre d'étanchéité (11) sur le côté du plan de référence (41) opposé à l'élément d'appui (12) - vu dans une coupe passant par le cadre d'étanchéité (11), qui s'étend perpendiculairement au plan de référence (41) et transversalement à la direction circonférentielle du cadre d'étanchéité (11) - présente une plus grande distance par rapport au plan de référence (41) en un point proche de la circonférence intérieure (43) du cadre d'étanchéité (11) qu'en un point proche de la circonférence extérieure (44) du cadre d'étanchéité (11).

9. Agencement d'étanchéité selon l'une quelconque des revendications précédentes, dans lequel chacun des appuis de ressort (22) de l'élément d'appui (12) est incliné par rapport à un plan de référence (42) positionné sur les appuis de ressort (22) de l'élément d'appui (12).

10. Agencement d'étanchéité selon la revendication 9, dans lequel chacun des appuis de ressort (22) de l'élément d'appui (12) sur le côté du plan de référence (42) opposé au cadre d'étanchéité (11) - vu dans une coupe passant par l'élément d'appui (12), qui s'étend perpendiculairement au plan de référence (42) et transversalement à la direction circonférentielle du cadre d'étanchéité (11) - présente une plus grande distance par rapport au plan de référence (42) en un point proche de la circonférence intérieure (43) du cadre d'étanchéité (11) qu'en un point proche de la circonférence extérieure (44) du cadre d'étanchéité (11).

11. Agencement d'étanchéité selon l'une des revendications précédentes, dans lequel un nombre de rapport sans dimension (a) se situe dans la plage de 0,001 à 0,02, en particulier dans la plage de 0,002 à 0,01, le nombre de rapports (a) étant le produit de l'épaisseur (t) de la rondelle élastique (13) et de la déviation (S) de la rondelle élastique (13) en état de fonctionnement, divisé par le carré de la distance (L) entre l'un des appuis de ressort (21) du cadre d'étanchéité (11) et l'appui de ressort (22) de l'élément d'appui (12) qui en est le plus proche.

12. Dispositif de commande (1) pour l'écoulement de réfrigérant dans un circuit de refroidissement d'un véhicule, comprenant un boîtier (2) et un élément de commande (6) mobile dans celui-ci pour modifier une section transversale de canal pouvant être affluée, **caractérisé en ce que** dans le boîtier (2) est disposé un agencement d'étanchéité (10) selon l'une des revendications 1 à 11, dont le cadre d'étanchéité (11) est pressé avec sa surface d'étanchéité (15) par la rondelle élastique (13) contre une surface d'étanchéité (16) de l'élément de commande (6) et s'y applique de manière étanche.

Fig. 2

Fig. 1

Fig. 3

Fig. 4

Fig. 6

Fig. 5

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014219460 A1
- DE 102014202589 A1
- DE 102015218391 A1
- US 5315200 A
- DE 102009025341 A1